# FASCICULE DE BREVET EUROPEEN

(11) **EP 2 755 875 B1**
(45) Date de publication et mention de la délivrance du brevet: **29.04.2020**
(21) Numéro de dépôt: 12751463.6
(22) Date de dépôt: 08.08.2012
(51) Int. Cl.: B60S 1/40

(54) **ADAPTATEUR A LANGUETTES FLEXIBLES POUR SYSTEME D'ESSUYAGE**
ADAPTER MIT FLEXIBLEN ZUNGEN FÜR EINE SCHEIBENWISCHANLAGE
ADAPTER COMPRISING FLEXIBLE TONGUES FOR A WIPING SYSTEM

(30) Priorité: 12.09.2011 FR 1158087
(43) Date de publication de la demande: 23.07.2014
(73) Titulaire: Valeo Systèmes d'Essuyage, 78322 Le Mesnil Saint Denis (FR)
(72) Inventeur: HOUSSAT, Stéphane, F-63112 Blanzat (FR); ROUSSEL, Loic, F-63270 Salledes (FR); TERRASSE, William, F-63270 Vic-le-Comte (FR)
(74) Mandataire: Valeo Systèmes d'Essuyage
(86) Numéro de dépôt international: PCT/EP2012/065527
(87) Numéro de publication internationale: WO 2013/037571

(56) Documents cités:
- DE-A1- 10 326 266
- DE-A1-102009 000 483
- KR-A- 20100 023 942
- US-A1- 2007 067 941
- US-A1- 2011 056 041
- US-B2- 7 621 016

## Description

La présente invention concerne un adaptateur pour système d'essuyage, ainsi qu'un système d'essuyage équipé d'un tel adaptateur.

Quoique non exclusivement, ce type de système d'essuyage est destiné à équiper un véhicule automobile, pour y permettre notamment l'essuyage des vitres.

Les automobiles sont couramment équipées de systèmes d'essuie-glace pour assurer un lavage du pare-brise et éviter que la vision qu'a le conducteur de son environnement soit perturbée. Ces essuie-glaces sont classiquement entraînés par un porte-balai effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur.

Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur.

Dans chacune de ces deux versions, le balai est rattaché au porte-balai tournant de l'essuie-glace par un ensemble constitué par :
- une pièce terminale, qui prolonge le porte-balai à son extrémité supérieure,
- un connecteur mécanique, solidaire du balai (sertie sur le palonnier ou directement sur le balai plat), et
- un adaptateur, pièce intermédiaire qui permet de fixer le connecteur mécanique à la pièce terminale, donc au porte-balai.

Pour assurer la fixation de l'adaptateur à l'intérieur de la pièce terminale, il est déjà connu d'équiper ledit adaptateur d'au moins un organe de verrouillage fixé en extrémité d'une languette flexible, cet organe de verrouillage pouvant coopérer avec une portion complémentaire prévue sur la pièce terminale.

Les documents US2011/056041, US 6,681,440, US 7,669,276 et US 7,621,016 divulguent de tels adaptateurs pour système d'essuyage, solidarisés au connecteur mécanique par l'intermédiaire d'organes de verrouillage fixés en extrémité de languettes flexibles.

Dans le document US 6,681,440, il est prévu un organe de verrouillage, disposé dans la partie inférieure de l'adaptateur et présentant une saillie vis-à-vis de la languette flexible à laquelle il est fixé, de manière que cette saillie puisse former une butée pour la portion complémentaire prévue sur la pièce terminale. Toutefois, dans cette réalisation antérieure, l'utilisation d'un seul organe de verrouillage rend la connexion entre l'adaptateur et la pièce terminale difficile à réaliser.

Dans les documents US2011/056041, US 7,669,276 et US 7,621,016, il est prévu, d'un côté de l'adaptateur, deux saillies disposées sur les parois latérales ce celui-ci, et, de l'autre côté dudit adaptateur, deux organes de verrouillage fixés en extrémité de languettes flexibles et disposés respectivement sur les deux parois latérales dudit adaptateur. Toutefois, dans ces réalisations antérieures, les deux organes de verrouillage étant disposés l'un en face de l'autre, vis-à-vis des parois latérales de l'adaptateur, ceux-ci ne peuvent être déplacés, par déformation de leurs languettes flexibles respectives, que sur une faible course. Il s'ensuit que la manipulation de ces deux organes de verrouillage est difficile et que, de fait, l'enclenchement de la pièce terminale à l'adaptateur, au niveau de ceux-ci, est également difficile à réaliser.

L'objet de la présente invention est de remédier à ces inconvénients en rendant l'adaptateur plus facile à manipuler au niveau de ses organes de verrouillage, de sorte que la connexion entre l'adaptateur et la pièce terminale puisse être réalisée de façon simple par un opérateur.

A cette fin, l'invention vise un adaptateur pour système d'essuyage, ledit système d'essuyage comprenant un porte-balai prolongé par une pièce terminale et un balai solidaire de la pièce terminale, ledit adaptateur étant apte à être interposé entre ladite pièce terminale et ledit balai, ledit adaptateur comprenant au moins deux organes de verrouillage, chacun constitué d'un bouton escamotable ménagé à une extrémité d'une languette flexible, pour verrouiller l'adaptateur vis-à-vis de la pièce terminale, lesdites languettes étant disposées de manière à s'entrecroiser lors de la manipulation des boutons escamotables (51A, 52A), innovant en ce que les languettes flexibles (51B, 52B) soit s'étendent chacune dans des plans de flexion distincts, les plans de flexion étant superposés et parallèles entre eux, soit sont articulées autour d'un axe commun (X-X').

Ainsi, grâce à la présente invention, les organes de verrouillage peuvent être facilement manipulés par un simple appui sur deux surfaces opposées, aptes à être déplacées dans des sens contraires tels que lesdits organes se rapprochent. De plus, les languettes flexibles des organes de verrouillage disposent d'une amplitude de déplacement plus grande, dans la mesure où celles-ci sont disposées de manière à s'entrecroiser et non à s'appuyer l'une contre l'autre.

Selon une caractéristique de l'invention, les boutons escamotables sont agencés pour solidariser l'adaptateur vis-à-vis de la pièce terminale en coopérant respectivement avec des évidements ménagés dans des branches latérales constitutives de la pièce terminale. Une fois monté sur la pièce terminale, les boutons escamotables bloquent tout mouvement de translation selon la direction longitudinale du porte-balai.

Selon l'invention, les languettes flexibles peuvent s'étendre chacune dans des plans de flexion distincts. Ces derniers sont définit par le plan dans lequel chaque languette se déforme quand une pression est exercée sur le bouton escamotable relié à la languette flexible concernée.

Selon l'invention, les plans de flexion peuvent être superposés et parallèles entre eux. On garantit ainsi un déplacement harmonieux des boutons escamotables de sorte que leurs faces externes restent sensiblement dans le plan de l'adaptateur.

Les languettes peuvent être articulées autour d'axes différents. Néanmoins, selon l'invention, les languettes peuvent être articulées autour d'un axe commun.

Dans une telle situation, les languettes flexibles sont disposées dans des plans de flexion orthogonaux à leur axe commun, lesdits plans de flexion étant suffisamment éloignés l'un de l'autre pour que lesdites languettes s'entrecroisent lors de la manipulation des boutons escamotables.

De préférence, les languettes présentent chacune une première portion, ainsi qu'une deuxième portion à l'extrémité de laquelle est fixé le bouton escamotable correspondant, ladite première portion étant inclinée, par rapport à ladite deuxième portion d'un angle sensiblement égal à 3° vers ledit bouton escamotable correspondant. De cette manière, l'angle entre les deux languettes peut être augmenté de 6°, ce qui permet un meilleur maintien mécanique de l'adaptateur dans la pièce terminale, par l'intermédiaire de leurs boutons escamotables et orifices respectifs.

Dans ce cas, avantageusement, l'un des boutons escamotables de verrouillage présente à la jonction entre la première et la deuxième portions, une butée apte à coopérer avec l'autre bouton escamotable de manière à former un point de pivotement additionnel entre ladite première et ladite deuxième portions disposé entre les portions d'au moins l'une des languettes. Ainsi, il est possible d'augmenter la force d'appui des languettes contre les branches latérales de la pièce terminale lorsque l'adaptateur est logé dans ladite pièce terminale.

Cette butée peut présenter une extrémité arrondie, afin de faciliter la rotation autour du point de pivotement additionnel.

Afin d'enclencher l'adaptateur selon l'invention avec la pièce terminale, les boutons escamotables, initialement disposés dans une position nominale, sont aptes à se rapprocher l'un de l'autre lors de la déformation de leurs languettes flexibles respectives, puis sont aptes à reprendre ladite position nominale en coopérant chacune avec un évidement pratiqué à cet effet dans la partie supérieure de la pièce terminale.

Afin de faciliter la manipulation des boutons escamotables de verrouillage, les surfaces des boutons escamotables de verrouillage, du côté opposé à leurs languettes respectives, sont munies de stries.

Avantageusement, au moins l'un des boutons escamotables de verrouillage est prolongé par une surface de préhension, ce qui permet d'assurer la préhension de l'adaptateur au moyen d'une ventouse apte à se coller sur cette surface, afin de déplacer ledit adaptateur avant assemblage sur le connecteur.

La présente invention concerne également un système d'essuyage comprenant un porte-balai se prolongeant à une extrémité par une pièce terminale, un balai solidaire d'un connecteur mécanique et un adaptateur relié à ladite pièce terminale et audit connecteur mécanique, ledit adaptateur comprenant au moins deux boutons escamotables de verrouillage fixés respectivement en extrémités de languettes flexibles, par l'intermédiaire desquels ledit adaptateur est apte à être solidarisé à ladite pièce terminale en coopérant respectivement avec des évidements pratiqués à cet effet dans des parties latérales de la pièce terminale, caractérisé en ce que :
- lesdits boutons escamotables de verrouillage sont disposés en regard l'un de l'autre, de manière que leurs languettes respectives se rapprochent lors de l'insertion dudit adaptateur dans ladite pièce terminale,
- lesdites languettes sont disposées de manière à s'entrecroiser lors de l'insertion dudit adaptateur dans ladite pièce terminale,
- les languettes flexibles (51B, 52B) soit s'étendent chacune dans des plans de flexion distincts, les plans de flexion étant superposés et parallèles entre eux, soit sont articulées autour d'un axe commun (X-X'). et.

Les figures du dessin annexé feront bien comprendre comment l'invention peut être réalisée. Sur ces figures, des références identiques désignent des éléments techniques semblables.
La figure 1 est une vue générale en perspective d'un système d'essuyage conforme à l'art antérieur.
La figure 2 est une vue schématique agrandie, en perspective, de la portion d'un système d'essuyage conforme à la présente invention, au niveau de laquelle sont assemblés le connecteur mécanique, l'adaptateur et la pièce terminale.
La figure 3 est une vue schématique semblable à celle de la figure 2, qui illustre l'assemblage du connecteur mécanique à la pièce terminale.
Les figures 4 à 6 sont trois vues schématiques en perspective de l'adaptateur de la figure 2, suivant trois orientations différentes.

Dans la suite de la description, les dénominations longitudinales ou latérales se réfèrent à l'orientation du porte-balai sur lequel est monté le balai d'essuie-glace. La direction longitudinale correspond à l'axe principal du porte-balai alors que les orientations latérales correspondent à des orientations perpendiculaires à l'axe du porte-balai dans son plan de rotation. Pour les directions longitudinales, les dénominations extérieure ou intérieure s'apprécient par rapport au centre de rotation du porte-balai de l'essuie-glace. Par ailleurs, les directions référencées comme supérieures ou inférieures correspondent à des orientations perpendiculaires au plan de rotation du porte-balai.

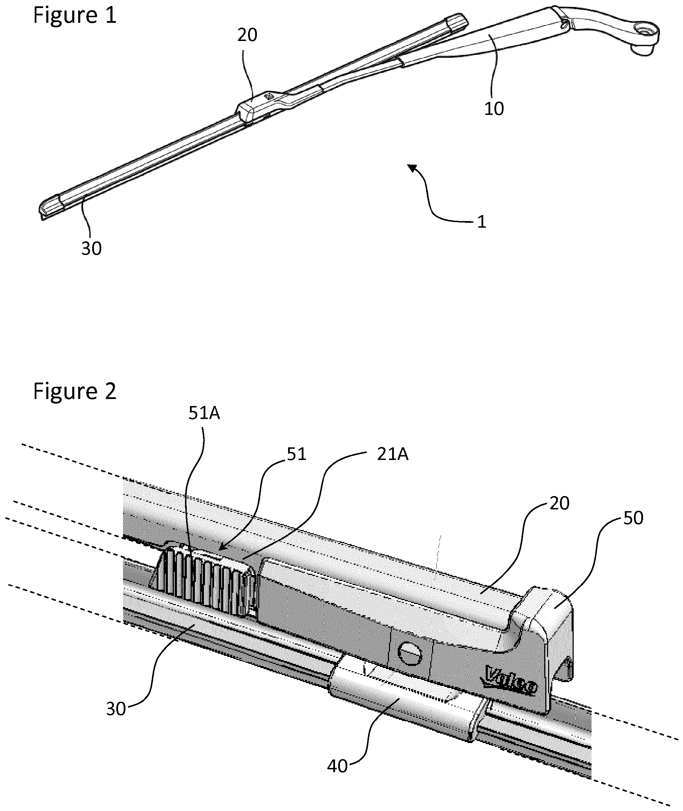

En se référant aux figures 1 à 3, on voit un essuie-glace 1 comprenant classiquement un porte-balai 10, autrement appelé bras d'essuyage, se prolongeant à son extrémité extérieure par une pièce terminale 20, qui est fixée, du côté intérieur, par un sertissage sur ledit porte-balai 10. La pièce terminale 20 s'insère dans un adaptateur 50 porteur du balai 30 par l'intermédiaire de son connecteur mécanique 40.

Sur la figure 2, on constate que la pièce terminale 20 est destinée à être insérée dans l'adaptateur 50 par un mouvement de translation dans un axe longitudinal, pour venir dans la position d'utilisation, où cet adaptateur est positionné en butée contre une forme conférée à la pièce terminale 20, avec laquelle il est destiné à coopérer. On comprend de ceci que la pièce terminale 20 se loge dans l'adaptateur 50.

L'adaptateur 50 est alors fixé à la pièce terminale 20 de façon réversible au moyen de deux organes de verrouillage 51 et 52, comprenant des boutons escamotables 51A et 52A qui coopèrent chacun avec un évidement pratiqué à cet effet dans les branches latérales 21 de la pièce terminale 20.

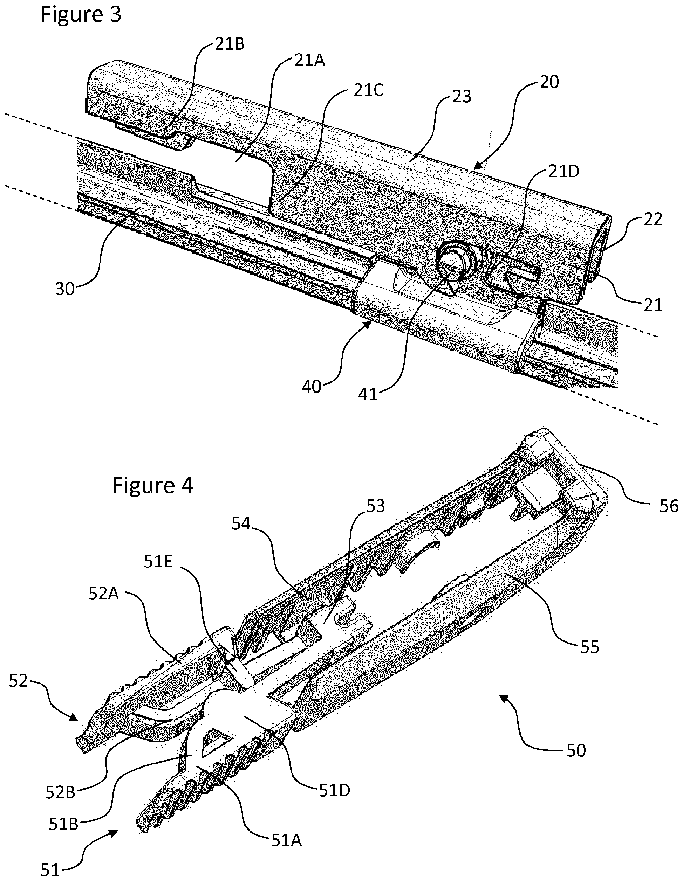

Comme représentée sur la figure 3, la pièce terminale 20 présente, du côté extérieur, une forme en « U » renversé comprenant deux branches latérales 21 et 22 s'étendant en direction du vitrage, ainsi qu'une base 23 dans sa partie supérieure. Sur les deux branches latérales 21 et 22 sont pratiqués deux orifices ou évidements (21A pour la branche 21) dans lesquels les boutons escamotables 51A et 52A des organes de verrouillage 51 et 52 de l'adaptateur 50 sont aptes à venir se loger. Chacune des branches latérales 21 et 22 présente par ailleurs deux butées en translation (21B et 21C pour la branche 21) vis-à-vis des boutons escamotables 51A et 52A. En outre, chacune des branches latérales 21 et 22 présente, du côté opposé aux orifices (21A pour la branche 21) pour les organes de verrouillage 51 et 52, un orifice ou évidement (21D pour la branche 21) au niveau duquel la pièce terminale est directement reliée au connecteur mécanique 40, ce dernier comprenant à cet effet deux boutons (dont seul l'un d'eux, désigné par la référence 41, est représenté sur la figure 3) de forme complémentaire desdits orifices (21D pour la branche 21). Ainsi, la pièce terminale 20 est fixé, d'un côté, à l'adaptateur 50, et, de l'autre côté, au connecteur 40, ce qui assure la solidité mécanique de l'assemblage formant le système d'essuie-glace selon l'invention.

Le connecteur mécanique 40 est solidarisé de manière indémontable sur le balai 30 de façon à assurer la transmission de l'effort mécanique en provenance du porte-balai 10 vers ledit balai 30. Ce connecteur mécanique 40 présente une forme sensiblement parallélépipédique s'étendant dans l'axe du balai 30, avec deux flancs latéraux desquels s'étendent latéralement les deux tourillons (dont le tourillon 41) qui, d'une part, permettent de solidariser le connecteur mécanique 40 à l'adaptateur 50, et, d'autre part, servent, par leur coopération avec les évidements (dont l'évidement 21D) pratiqués dans les parois latérales 21 et 22 de l'adaptateur 50, d'axe pour la rotation du balai 3 par rapport au porte-balai 1.

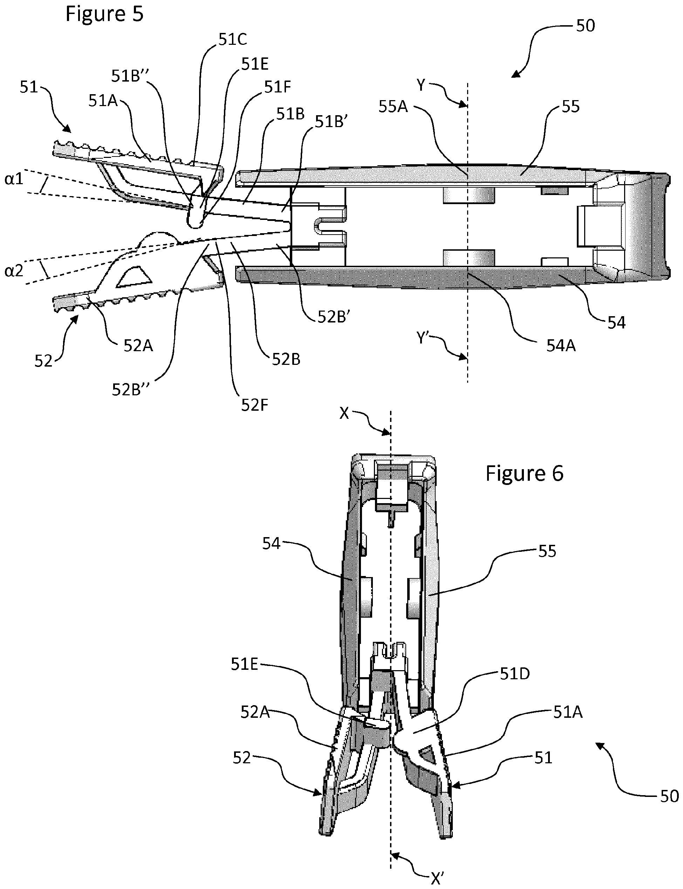

En se référant maintenant aux figures 4 à 6, on voit le détail de l'adaptateur 50. L'adaptateur 50 présente une forme en chape, complémentaire au volume externe de la pièce terminale 20, cette dernière venant se loger dans un volume interne délimité par l'adaptateur 50. Deux parois latérales 54 et 55 sont jointes par un pont 56. Cet adaptateur 50 comprend également deux trous 54A et 55A pratiqués au travers respectivement des parois latérales 54 et 55 et présentant un axe Y-Y' confondu (figure 5), destiné à permettre la fixation de l'adaptateur 50 au connecteur mécanique 40 et à servir d'axe de rotation entre le balai 30 et le porte-balai 10 quand le système d'essuyage est assemblé. Ainsi, le balai 30 présente au moins un degré de liberté en rotation par rapport au porte-balai 10, et plus spécifiquement par rapport à la pièce terminale 20, afin de permettre audit balai 30 de suivre la courbure du vitrage à essuyer.

L'adaptateur 50 comporte par ailleurs les deux organes de verrouillage 51 et 52, présentant respectivement la forme de boutons escamotables 51A et 52A fixés en extrémités de languettes ou bras flexibles 51B et 52B. Ces organes de verrouillage 51 et 52 sont destinés à permettre la fixation de l'adaptateur 50 vis-à-vis de la pièce terminale 20 en coopérant respectivement avec des évidements (dont l'évidement 21A) pratiqués dans les branches latérales 21 et 22 de la pièce terminale 20 (figure 3).

Comme représenté sur les figures 4 à 6, les deux organes de verrouillage 51 et 52 sont disposés en regard l'un de l'autre. La notion de « en regard de » signifie qu'au moins une portion d'un premier organe de verrouillage 51 est située dans le prolongement d'une portion d'un deuxième organe de verrouillage 52. Autrement dit, l'invention couvre le cas où les deux organes de verrouillage sont décalés l'un par rapport à l'autre dans la direction longitudinale.

Selon un mode de réalisation préféré, les deux organes de verrouillage 51 et 52 sont disposés en regard l'un de l'autre et de façon opposé par rapport à un axe longitudinal de l'adaptateur 50. Avantageusement, les boutons escamotables 51A et 52A sont ainsi l'un en face de l'autre.

Les organes de verrouillage 51 et 52 sont disposés de manière que leurs languettes flexibles respectives 51B et 52B, ainsi que leurs boutons escamotables 51A et 52A, se rapprochent l'un de l'autre lorsque l'adaptateur 50 est en train d'être inséré sur la pièce terminale 20. Ainsi, par un simple pincement des deux boutons escamotables 51A et 52A, les deux organes de verrouillage 51 et 52, initialement disposés dans une position nominale dans laquelle la pièce terminale 20 n'est pas insérée, peuvent être rapprochés afin de permettre le passage des évidements (dont l'évidement 21A). Puis, lorsque ces évidements (dont l'évidement 21A) sont disposés de façon complémentaire vis-à-vis des deux boutons escamotables 51A et 52A, les deux boutons escamotables 51A et 52A peuvent être relâchés pour permettre le blocage de la pièce terminale 20 à l'intérieur de l'adaptateur 50.

Ainsi, les languettes flexibles 51B et 52B se déforment dans un plan, appelé plan de flexion, et sont agencées l'une par rapport à l'autre de sorte que le plan de flexion de chaque de la première languette flexible est distinct de celui de la deuxième languette flexible, ces plans de flexion pouvant par ailleurs être parallèle entre eux.

Par ailleurs, conformément à la présente invention, les languettes flexibles 51B et 52B sont articulées autour d'un axe commun X-X' (figure 6). Cette axe commun X-X' passe au niveau d'une articulation 53 dont la section forme un « H ». Ces languettes flexibles sont issues de cette articulation 53 et sont disposées dans les plans de flexion, ceux-ci étant orthogonaux à cet axe commun X-X'. Ces plans de flexion sont éloignés l'un de l'autre de façon suffisante, c'est-à-dire de sorte à ce que la première languette chevauche la deuxième languette sans la toucher, pour éviter que lesdites languettes flexibles 51B et 52B s'entrecroisent, autrement dit se touchent, lorsque la pièce terminale 20 est insérée à l'intérieur de l'adaptateur 50 ou actionnée manuellement. De cette manière, les organes de verrouillage 51 et 52 peuvent être déplacés, par déformation de leurs languettes flexibles 51B et 20B respectives, au-delà d'un jeu de déformation limité par le fait que lesdites languettes flexibles 51B et 20B seraient dans un même plan orthogonal à l'axe commun X-X', ce qui offre un plus grand débattement des boutons escamotables 51A et 51B et donc une plus grande facilité d'utilisation de l'adaptateur 50 en vue de le connecter à la pièce terminale 20.

En outre, comme cela est mis en évidence sur la figure 5, la languette 51B se compose de deux portions : une première portion 51B', proche de l'axe commun X-X', et une deuxième portion 51B", à l'extrémité de laquelle est fixé le bouton escamotable 51A. De même, la languette 52B se compose de deux portions : une première portion 5BB', proche de l'axe commun X-X', et une deuxième portion 5BB", à l'extrémité de laquelle est fixé le bouton escamotable 5BA. Conformément à une caractéristique particulièrement avantageuse de l'invention, pour chaque languette, les première et deuxième portions sont inclinées l'une par rapport à l'autre d'un angle (al pour le bouton 51, a2 pour le bouton 52) non-nul, de préférence sensiblement égal à 3°. Cet angle est orienté dans le sens du bouton escamotable correspondant. Cette configuration offre un meilleur maintien mécanique de l'adaptateur 50 lorsqu'il est logé à l'intérieur de la pièce terminale 20, dans la mesure où les languettes sont précontraintes contre les tranches des bras latéraux 21 et 22 de ladite pièce terminale 20.

L'adaptateur 50 est ainsi reconnaissable en ce qui présente deux languettes flexibles 52A et 52B qui s'étendent chacune dans une direction concourante au niveau de l'axe commun X-X', ces deux directions formant un angle compris entre 5° et 25° en position de repos, c'est-à-dire quand les boutons escamotables 51A et 51B ne sont pas actionnés.

Les languettes flexibles 52A et 52B se chevauchent en ce sens qu'elles se déplacent chacune dans des plans distincts, leurs épaisseurs étant adaptées pour que la première languette flexible 51B ne frotte pas sur la deuxième languette flexible 51A quand les boutons escamotables sont actionnés.

Cette organisation générale des organes de verrouillage 51 et 52 présente l'avantage d'autoriser un déplacement suffisant des boutons escamotables 51A et 52A pour les dégager respectivement de l'évidement (21A pour la branche latérale 21) pratiqué dans chaque branche latérale 21 et 22, tout en respectant une dimension dans la direction Y-Y' la plus restreinte possible, ce qui contribue à améliorer l'esthétique extérieur du système d'essuyage.

On notera par ailleurs que les boutons escamotables de verrouillage 51A et 52A, du côté opposé à leurs languettes respectives 51B et 52B, sont munies de stries (dont les stries 51C sur la figure 5), qui permettent une meilleure manipulation de ces boutons lors de la connexion de l'adaptateur 50 à la pièce terminale 20.

On notera également qu'au moins l'un des deux boutons escamotables (le bouton 51A sur la figure 6) peut être prolongé par une surface de préhension 51D, par laquelle l'adaptateur 50 peut être déplacé au moyen d'une ventouse, avant l'assemblage dudit adaptateur sur le connecteur.

On notera par ailleurs que l'un des deux boutons escamotables de verrouillage, ici le bouton 51A, peut présenter, à la jonction entre la première portion 51B' et la deuxième portion 51B", une butée 51E apte à coopérer avec l'autre bouton escamotable 52A de manière à former un point de pivotement additionnel 51F entre ladite première portion 51B' et ladite deuxième portion 51B". Cette butée permet d'augmenter la force d'appui des languettes 51B et 52B contre les branches latérales 21 et 22 de la pièce terminale 20 lorsque l'adaptateur 50 est logé dans ladite pièce terminale 20, et ainsi de garantir que lesdites languettes sont bien en prise sur les tranches desdits bras latéraux. On notera que cette butée peut avantageusement présenter une extrémité arrondie, ce qui permet de faciliter la rotation autour du point de pivotement additionnel 51F.

Dans cette configuration, les languettes peuvent fonctionner en trois temps :
- les languettes sont rapprochées lors de la phase de présentation de l'adaptateur 50 dans la pièce terminale 20 (la butée 51E vient en butée sur la languette opposée 52B) ;
- les boutons escamotables 51A et 52A sont pressées manuellement pour permettre la rotation des deuxièmes portions 51B" et 52N" des languettes 51B et 52B autour du point de pivotement additionnel 51F, ce qui permet ainsi de rapprocher les boutons escamotables 51A et 52A ; et
- lorsque l'adaptateur 50 est logé dans la pièce terminale 20, les boutons escamotables 51A et 52A sont relâchés manuellement, de sorte que lesdits boutons escamotables 51A et 52A viennent en appui contre les bras latéraux 21 et 22 de la pièce terminale, ce qui assure le maintien mécanique dudit adaptateur 50 à l'intérieur de ladite pièce terminale 20.

De plus, l'adaptateur 50 étant ainsi contraint dans la pièce terminale 20, seule une intervention manuelle permet de déverrouiller ledit adaptateur 50.

La présente invention a été décrite ci-dessus pour un adaptateur pour un système d'essuyage dont le nombre d'organes de verrouillage est égal à deux, mais il va de soi que la présente invention peut être mise en œuvre avec un nombre différent d'organes de verrouillage, par exemple trois.

On notera enfin que l'adaptateur 50 et tous les éléments qui le constituent sont réalisés par une pièce unitaire, fabriquée par exemple par moulage d'une même matière plastique.

## Revendications

1. Adaptateur (50) pour système d'essuyage (1), ledit système d'essuyage (1) comprenant un porte-balai (10) prolongé par une pièce terminale (20) et un balai (30) solidaire de la pièce terminale, ledit adaptateur (50) étant apte à être interposé entre ladite pièce terminale (20) et ledit balai (30), ledit adaptateur (50) comprenant au moins deux organes de verrouillage (51, 52), chacun constitué d'un bouton escamotable (51A, 52A) ménagé à une extrémité d'une languette flexible (51B, 52B), pour verrouiller l'adaptateur (50) vis-à-vis de la pièce terminale (20), lesdites languettes (51B, 52B) étant disposées de manière à s'entrecroiser lors de la manipulation des boutons escamotables (51A, 52A), **caractérisé en ce que** les languettes flexibles (51B, 52B) soit s'étendent chacune dans des plans de flexion distincts, les plans de flexion étant superposés et parallèles entre eux, soit sont articulées autour d'un axe commun (X-X').

2. Adaptateur selon la revendication 1, dans lequel les boutons escamotables (51A, 52A) sont agencés pour solidariser l'adaptateur (50) vis-à-vis de la pièce terminale (20) en coopérant respectivement avec des évidements (21A, 22A) ménagés dans des branches latérales (21, 22) constitutives de la pièce terminale (20).

3. Adaptateur selon l'une quelconque des revendications précédentes, dans lequel les languettes flexibles (51A, 52A) sont disposées dans des plans de flexion orthogonaux à leur axe commun (X-X'), lesdits plans de flexion étant suffisamment éloignés l'un de l'autre pour que lesdites languettes (51B, 52B) s'entrecroisent lors de la manipulation des boutons escamotables (51A, 51B).

4. Adaptateur selon l'une quelconque des revendications précédentes, dans lequel les languettes (51B, 52B) présentent chacune une première portion (51B', 52B'), ainsi qu'une deuxième portion (51B", 52B") à l'extrémité de laquelle est fixé le bouton escamotable correspondant (51A, 52A), ladite première portion (51B', 52B') étant inclinée, par rapport à ladite deuxième portion (51B", 52B") d'un angle (α1, α2) sensiblement égal à 3° vers ledit bouton escamotable correspondant (51A, 52A).

5. Adaptateur selon la revendication 4, dans lequel l'un (51A) des boutons escamotables de verrouillage présente, à la jonction entre la première (51B') et la deuxième (51B") portions, une butée (51E) apte à coopérer avec l'autre bouton escamotable (52A) de manière à former un point de pivotement additionnel (51F) entre ladite première (51B') et ladite deuxième (51B") portions.

6. Adaptateur selon l'une quelconque des revendications précédentes, dans lequel les boutons escamotables (51A, 52A), initialement disposés dans une position nominale, sont aptes à se rapprocher l'un de l'autre lors de la déformation de leurs languettes flexibles respectives (51B, 52B), puis sont aptes à reprendre ladite position nominale en coopérant chacune avec un évidement (21A, 22A) pratiqué à cet effet dans la partie supérieure de la pièce terminale (20).

7. Adaptateur selon l'une quelconque des revendications précédentes, dans lequel les surfaces des boutons escamotables de verrouillage (51A, 52A), du côté opposé à leurs languettes respectives (51B, 52B), sont munies de stries (51C).

8. Adaptateur selon l'une quelconque des revendications précédentes, dans lequel au moins l'un des boutons escamotables de verrouillage (51, 52) est prolongé par une surface de préhension (51D).

9. Système d'essuyage (1) comprenant un porte-balai (10) se prolongeant à une extrémité par une pièce terminale (20), un balai (30) solidaire d'un connecteur mécanique (40) et un adaptateur (50) relié à ladite pièce terminale (20) et audit connecteur mécanique (40), ledit adaptateur (50) comprenant au moins deux boutons escamotables de verrouillage (51A, 52A) fixés respectivement en extrémités de languettes flexibles (51B, 52B), par l'intermédiaire desquels ledit adaptateur (50) est apte à être solidarisé à ladite pièce terminale (20) en coopérant respectivement avec des évidements (21A, 22A) pratiqués à cet effet dans des parties latérales (21, 22) de la pièce terminale (20), **caractérisé en ce que** :
- lesdits boutons escamotables de verrouillage (51A, 52A) sont disposés en regard l'un de l'autre, de manière que leurs languettes respectives (51B, 52B) se rapprochent lors de l'insertion dudit adaptateur (50) dans ladite pièce terminale (20),
- lesdites languettes (51B, 52B) sont disposées de manière à s'entrecroiser lors de l'insertion dudit adaptateur (50) dans ladite pièce terminale (20), et
- les languettes flexibles (51B, 52B) soit s'étendent chacune dans des plans de flexion distincts, les plans de flexion étant superposés et parallèles entre eux, soit sont articulées autour d'un axe commun (X-X').

## Patentansprüche

1. Adapter (50) für eine Scheibenwischanlage (1), wobei die Scheibenwischanlage (1) einen Wischerhalter (10) umfasst, der durch ein Endstück (20) verlängert ist, und ein Wischerblatt (30), das einteilig mit dem Endstück ist, wobei der Adapter (50) dafür geeignet ist, zwischen dem Endstück (20) und dem Wischerblatt (30) angeordnet zu werden, wobei der Adapter (50) mindestens zwei Verriegelungselemente (51, 52) umfasst, die jeweils aus einem versenkbaren Knopf (51A, 52A) bestehen, der an einem Ende einer flexiblen Zunge (51B, 52B) aufgenommen ist, um den Adapter (50) gegenüber dem Endstück (20) zu verriegeln, wobei die Zungen (51B, 52B) derart angeordnet sind, dass sie einander bei der Manipulation der versenkbaren Knöpfe (51A, 52A) kreuzen, **dadurch gekennzeichnet, dass** sich die flexiblen Zungen (51B, 52B) entweder jeweils in verschiedenen Biegeebenen erstrecken, wobei die Biegeebenen übereinander liegen und zueinander parallel sind, oder um eine gemeinsame Achse (X-X') angelenkt sind.

2. Adapter nach Anspruch 1, wobei die versenkbaren Knöpfe (51A, 52A) eingerichtet sind, um den Adapter (50) gegenüber dem Endstück (20) zu befestigen, indem sie jeweils mit Aufnahmen (21A, 22A) zusammenwirken, welche in den lateralen Zweigen (21, 22) angeordnet sind, die das Endstück (20) bilden.

3. Adapter nach einem der vorhergehenden Ansprüche, wobei die flexiblen Zungen (51A, 52A) in Biegeebenen orthogonal zu ihrer gemeinsamen Achse (X-X') angeordnet sind, wobei die Biegeebenen ausreichend voneinander entfernt sind, so dass die Zungen (51B, 52B) einander bei der Manipulation der versenkbaren Knöpfe (51A, 51B) kreuzen.

4. Adapter nach einem der vorhergehenden Ansprüche, wobei die Zungen (51B, 52B) jeweils einen ersten Abschnitt (51B', 52B') sowie einen zweiten Abschnitt (51B", 52B") aufweisen, an dessen Ende der entsprechende versenkbare Knopf (51A, 52A) fixiert ist, wobei der erste Abschnitt (51B', 52B') in Bezug auf den zweiten Abschnitt (51B", 52B") unter einem Winkel (α1, α2) im Wesentlichen gleich 3° zu dem entsprechenden versenkbaren Knopf (51A, 52A) geneigt ist.

5. Adapter nach Anspruch 4, wobei einer (51A) der versenkbaren Verriegelungsknöpfe, an der Verbindung zwischen dem ersten (51B') und dem zweiten (51B") Abschnitt, einen Anschlag (51E) aufweist, der dafür geeignet ist, mit dem anderen versenkbaren Knopf (52A) zusammenzuwirken, um einen zusätzlichen Schwenkpunkt (51F) zwischen dem ersten (51B') und dem zweiten (51B") Abschnitt zu bilden.

6. Adapter nach einem der vorhergehenden Ansprüche, wobei die versenkbaren Knöpfe (51A, 52A), die anfänglich in einer Soll-Position angeordnet sind, dafür geeignet sind, sich bei der Verformung ihrer jeweiligen flexiblen Zungen (51B, 52B) aneinander anzunähern, dann dafür geeignet sind, die genannte Soll-Position wieder einzunehmen, indem sie jeweils mit einer Aufnahme (21A, 22A) zusammenwirken, die zu diesem Zweck in dem oberen Teil des Endstücks (20) ausgeführt ist.

7. Adapter nach einem der vorhergehenden Ansprüche, wobei die Flächen der versenkbaren Verriegelungsknöpfe (51A, 52A), auf der Seite gegenüber ihren jeweiligen Zungen (51B, 52B) , mit Rippen (51C) versehen sind.

8. Adapter nach einem der vorhergehenden Ansprüche, wobei mindestens der eine der versenkbaren Verriegelungsknöpfe (51, 52) durch eine Grifffläche (51D) verlängert ist.

9. Scheibenwischanlage (1), umfassend einen Wischerhalter (10), der an einem Ende durch ein Endstück (20) verlängert ist, ein Wischerblatt (30), das einteilig mit einem mechanischen Anschluss (40) ist, und einen Adapter (50), der mit dem Endstück (20) und mit dem mechanischen Anschluss (40) verbunden ist, wobei der Adapter (50) mindestens zwei versenkbare Verriegelungsknöpfe (51A, 52A) umfasst, die jeweils an Enden flexibler Zungen (51B, 52B) fixiert sind, mit Hilfe derer der Adapter (50) dafür geeignet ist, an dem Endstück (20) befestigt zu werden, indem sie jeweils mit Aufnahmen (21A, 22A) zusammenwirken, die zu diesem Zweck in lateralen Teilen (21, 22) des Endstücks (20) ausgeführt sind, **dadurch gekennzeichnet, dass**:
- die versenkbaren Verriegelungsknöpfe (51A, 52A) einander gegenüber derart angeordnet sind, dass sich ihre jeweiligen Zungen (51B, 52B) beim Einsetzen des Adapters (50) in das Endstück (20) aneinander annähern,
- die Zungen (51B, 52B) derart angeordnet sind, dass sie einander beim Einsetzen des Adapters (50) in das Endstück (20) kreuzen, und
- die flexiblen Zungen (51B, 52B) sich jeweils entweder in verschiedenen Biegeebenen erstrecken, wobei die Biegeebenen übereinander liegen und parallel zueinander sind, oder um eine gemeinsame Achse (X-X') angelenkt sind.

## Claims

1. Adapter (50) for a wiper system (1), said wiper system (1) comprising a wiper arm (10) extended by an end fitting (20) and a wiper (30) fastened to the end fitting, said adapter (50) being adapted to be disposed between said end fitting (20) and said wiper (30), said adapter (50) comprising at least two locking members (51, 52) each consisting of a retractable button (51A, 52A) provided at one end of a flexible tongue (51B, 52B) for locking the adapter (50) relative to the end fitting (20), said tongues (51B, 52B) being disposed so as to cross over during manipulation of the retractable buttons (51A, 52A), **characterized in that** the flexible tongues (51B, 52B) either lie in different bending planes, the bending planes being superposed and parallel to each other, or are articulated about a common axis (X-X').

2. Adapter according to Claim 1, wherein the retractable buttons (51A, 52A) are adapted to fasten the adapter (50) relative to the end fitting (20) by respectively cooperating with openings (21A, 22A) provided in lateral branches (21, 22) of the end fitting (20).

3. Adapter according to any one of the preceding claims, wherein the flexible tongues (51A, 52A) are disposed in bending planes orthogonal to their common axis (X-X'), said bending planes being sufficiently far apart for said tongues (51B, 52B) to cross over during manipulation of the retractable buttons (51A, 51B).

4. Adapter according to any one of the preceding claims, wherein the tongues (51B, 52B) each have a first portion (51B', 52B') and a second portion (51B", 52B") to the end of which the corresponding retractable button (51A, 52A) is fixed, said first portion (51B', 52B') being inclined relative to said second portion (51B", 52B") at an angle (α1, α2) substantially equal to 3° toward said corresponding retractable button (51A, 52A).

5. Adapter according to Claim 4, wherein one retractable locking button (51A) has at the junction between the first portion (51B') and the second portion (51B") an abutment (51E) adapted to cooperate with the other retractable button (52A) so as to form an additional pivot point (51F) between said first portion (51B') and said second portion (51B").

6. Adapter according to any one of the preceding claims, wherein the retractable buttons (51A, 52A), initially disposed in a nominal position, are adapted to move toward each other on deformation of their respective flexible tongues (51B, 52B) and then to return to said nominal position by each cooperating with an opening (21A, 22A) provided for this purpose in the upper portion of the end fitting (20).

7. Adapter according to any one of the preceding claims, wherein the surfaces of the retractable locking buttons (51A, 52A) on the side opposite their respective tongues (51B, 52B) are provided with striations (51C).

8. Adapter according to any one of the preceding claims, wherein at least one of the retractable locking buttons (51, 52) is extended by a holding surface (51D).

9. Wiper system (1) comprising a wiper arm (10) extended at one end by an end fitting (20), a wiper (30) fastened to a mechanical connector (40) and an adapter (50) connected to said end fitting (20) and to said mechanical connector (40), said adapter (50) comprising at least two retractable locking buttons (51A, 52A) respectively fixed to the ends of flexible tongues (51B, 52B) by means of which said adapter (50) is adapted to be fastened to said end fitting (20) by respectively cooperating with openings (21A, 22A) provided for this purpose in lateral portions (21, 22) of the end fitting (20), **characterized in that**:
- said retractable locking buttons (51A, 52A) are disposed facing each other so that their respective tongues (51B, 52B) move toward each other on insertion of said adapter (50) in said end fitting (20), and
- said tongues (51B, 52B) are disposed so as to cross over during insertion of said adapter (50) in said end fitting (20),
- the flexible tongues (51B, 52B) either lie in different bending planes, the bending planes being superposed and parallel to each other, or are articulated about a common axis (X-X').
